**Europäisches Patentamt**

**European Patent Office**

**Office européen des brevets**

(19)

(11) Veröffentlichungsnummer: **0 089 943 B1**

(12) **EUROPÄISCHE PATENTSCHRIFT**

(45) Veröffentlichungstag der Patentschrift:
23.10.85

(21) Anmeldenummer: **83890023.1**

(22) Anmeldetag: **18.02.83**

(51) Int. Cl.⁴: **B 23 K 35/30**, C 22 C 38/44, C 22 C 38/54

(54) Verfahren zur Herstellung von geschweissten Gegenständen aus einer ferritisch-austenitischen Cr-Ni-Mo-Stahllegierung.

(30) Priorität: **18.03.82 AT 1078/82**

(43) Veröffentlichungstag der Anmeldung:
**28.09.83 Patentblatt 83/39**

(45) Bekanntmachung des Hinweises auf die Patenterteilung:
**23.10.85 Patentblatt 85/43**

(84) Benannte Vertragsstaaten:
**BE CH DE FR GB IT LI NL SE**

(56) Entgegenhaltungen:
**EP - A - 0 005 439**
**DE - A - 1 921 790**
**DE - B - 2 644 039**
**US - A - 2 481 385**
**US - A - 3 118 761**

**STAHL UND EISEN, Band 102, Nr. 11, Mai 1982, Seiten 577-582, Düsseldorf, DE. G. RABENSTEINER et al.: "Die Entwicklung hochkorrosionsbeständiger CrNiMo-Schweisszusatzwerkstoffe mit hoher Festigkeit"**

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Rabensteiner, Günther, Dr., Dipl.-Ing., Johann Böhm-Strasse 31/37, A-8605 Kapfenberg (AT)**
Erfinder: **Perteneder, Ernst Dr., Dipl.-Ing., Carl Morre-Strasse 30, A-8605 Kapfenberg (AT)**
Erfinder: **Schabereiter, Heinz, Hugo-Wolf-Strasse 4, A-8605 Kapfenberg (AT)**
Erfinder: **Tösch, Josef, Dr. Karl Renner-Strasse 4, A-8600 Bruck/Mur (AT)**

(74) Vertreter: **Widtmann, Georg, Dr., Vereinigte Edelstahlwerke Aktiengesellschaft (VEW) Elisabethstrasse 12, A-1010 Wien (AT)**

## Beschreibung

Die Erfindung bezieht sich auf ein Verfahren zur Herstellung von geschweißten, ohne nachfolgende Wärmebehandlung IK-beständigen Gegenständen aus einer ferritisch-austenitischen Cr—N—Mo-Stahllegierung, bestehend in Gew.-% aus max. 0,06% C, max. 0,80% Si, 4,0 bis 6,0% Mn, 23,5 bis 28,0% Cr, 3,5 bis 5,5% Ni, 1,0 bis 3,0% Mo, 0,35 bis 0,60% N, Rest Fe und unvermeidliche Verunreinigungen, die mittels eines ferritisch-austenitischen Zusatzwerkstoffes verschweißt wird.

Die genannte Stahllegierung kommt insbesondere in den Fällen zum Einsatz, wenn neben einer hohen Allgemein-Korrosionsbeständigkeit aus Lochfraß, Spannungsrißkorrosionsbeständigkeit und IK-Beständigkeit verlangt wird und trotz hoher Festigkeit ein gutes Zähigkeitsverhalten verlangt wird, wie etwa bei der Anwendung im Rahmen der Meerestechnik, der Nahrungsmittelindustrie, der Färbereitechnik u. s. f. In all den Fällen, bei denen geschweißte Konstruktionen herzustellen sind, hängt die Einsatzmöglichkeit des Stahles davon ab, einen Schweißzusatzwerkstoff zur Verfügung zu haben, dessen auf das Schweißgut bezogene technologische und korrosionstechnische Eigenschaften mit denen des Stahles weitgehend übereinstimmen. Wenngleich man annehmen könnte, daß die erwähnten Voraussetzungen bei einem sogenannten artgleichen, d. h. dem Stahl entsprechenden Zusatzwerkstoff am ehesten gegeben sind, trifft dies im vorliegenden Fall nicht zu, weil das ausgewogene Gefügeverhältnis des Stahles nicht mit demjenigen einer rasch erstarrenden Schweißgutschmelze aus demselben Werstoff übereinstimmt.

Aufgabe der Erfindung war es daher, einen für das Schweißen dieser Stahllegierung geeigneten Zusatzwerkstoff zu schaffen, durch dessen Schweißgut die bestmögliche Übereinstimmung der technologischen und korrosionstechnischen Eigenschaften mit dem Stahl und damit die volle Ausschöpfung aller seiner Vorteile ohne nachfolgende Wärmebehandlung der geschweißten Teile sichergestellt wird.

Das erfindungsgemäße Verfahren löst diese Aufgabe und sieht zur Herstellung von geschweißten, ohne nachfolgende Wärmebehandlung IK-beständigen Gegenständen aus dem eingangs genannten Stahl vor, daß für das Schweißen ein vom Grundwerkstoff abweichender Werkstoff mit max. 0,06% C, max. 1,0% Si, 4,0 bis 6,5% Mn, 23,5 bis 28,0% Cr, 6,5 bis 8,5% Ni, 1,0 bis 3,0% Mo, 0,30 bis 0,50% N, Rest Fe und unvermeidliche Verunreinigungen als Zusatzwerkstoff in Form einer unter Schutzgas bzw. unter Flußmittelabdeckung Draht- bzw. Bandelektrode, eines diese Zusammensetzung als reines Schweißgut liefernden Fülldrahtes oder einer solchen ummantelten Stabelektrode verwendet wird.

Das Verfahren wird nachfolgend unter Bezugnahme auf ein Ausführungsbeispiel näher erläutert.

Bauteile einer Meerwasser-Entsalzungsanlage wurden durch Verschweißen von Blechteilen (Wandstärke: 8 mm) aus dem ferritisch-austenitischen Cr—Ni—Mo-Stahl der Zusammensetzung 0,03% C, 0,55% Si, 5,30% Mn, 24,8% Cr, 2,20% Mo, 3,95% Ni, 0,39% N, Rest im wesentlichen Fe mit einem Inertgas-Schweißdraht von 2,4 mm Durchmesser der Zusammensetzung: 0,025% C, 0,35% Si, 5,6% Mn, 25,1% Cr, 2,1% Mo, 7,5% Ni, 0,36% N, Rest im wesentlichen Fe unter Argon hergestellt.

Zuvor waren mit dem Schweißzusatzwerkstoff entsprechende Schweißversuchsproben gebildet und das Schweißgut einer Untersuchung hinsichtlich der mechanischen Gütewerte, des Lochfraßpotentiales in Seewasser, der Lochfraßprüfung in mit NaCl versetzter Ferrichloridlösung unter durch Krustenbildung verschärften Bedingungen sowie einer Korrosionsprüfung nach dem Huey-Test (nach ASTMA 262/70) und einer IK-Prüfung nach DIN 50 914 unterzogen worden. Dabei hatte sich gezeigt, daß die mechanischen Gütewerte voll entsprechen, daß eine sehr gute Lochfraßbeständigkeit festzustellen ist (Lochfraßpotential in Seewasser bei 60°C unter Stickstoff-Spülung: +520 mV$_H$), der Huey-Test eine niedrige Abtragungsrate von bloß etwa 0,14 g/m²h (für den Stahl wurden 0,26 g/m²h) ermittelt!) ergibt und auch die Beständigkeitsprüfung hinsichtlich interkristalliner Korrosion ein positives, also IK-Beständigkeit anzeigt.

Die aus den verschweißten Blechen hergestellten Anlagenteile stehen seit Monaten klaglos im praktischen Einsatz und haben die in sie gesetzten Erwartungen voll erfüllt.

## Patentanspruch

Verfahren zur Herstellung von geschweißten, ohne nachfolgende Wärmebehandlung IK-beständigen Gegenständen aus einer ferritisch-austenitischen Cr—Ni—Mo-Stahllegierung, bestehend in Gewichtsprozenten aus

max. 0,06% C
max. 0,80% Si
4,0 bis 6,0% Mn
23,5 bis 28,0% Cr
3,5 bis 5,5% Ni
1,0 bis 3,0% Mo
0,35 bis 0,60% N
Rest Fe und unvermeidliche Verunreinigungen,

die mittels eines ferritisch-austenitischen Zusatzwerkstoffes verschweißt wird, dadurch gekennzeichnet, daß für das Schweißen ein vom Grundwerkstoff abweichender Werkstoff mit

max. 0,06% C
max. 1,0% Si

4,0 bis 6,5% Mn
23,5 bis 28,0% Cr
6,5 bis 8,5%Ni
1,0 bis 3,0% Mo
0,30 bis 0,50% N
Rest Fe und unvermeidliche Verunreinigungen,

als Zusatzwerkstoff in Form einer unter Schutzgas bzw. unter Flußmittelabdeckung veschweißten Draht- bzw. Bandelektrode, eines diese Zusammensetzung als reines Schweißgut liefernden Fülldrahtes oder einer solchen unmmantelten Stabelektrode verwendet wird.

## Claim

A method of preparing welded articles, which are intercrystalline-corrosion resistant without subsequent heat treatment, from a ferritic/austenitic Cr—N—Mo steel alloy, consisting in percentage by weight of

max. 0.06% C
max. 0.80% Si
4.0 to 6.0% Mn
23.5 to 28.0% Cr
3.5 to 5.5% Ni
1.0 to 3.0% Mo
0.35 to 0.60% N
remainder Fe and unavoidable impurities,

which are welded by means of a ferritic/austenitic additive material, characterized in that for welding purposes a material which differs from the main material and which has:

max. 0.06% C
max. 1.0% Si
4.0 to 6.5% Mn
23.5 to 28.0% Cr
6.5 to 8.5% Ni
1.0 to 3.0% Mo
0.30 to 0.50% N
remainder Fe and unavoidable impurities,

is used as an additive material in the form of a wire or strip electrode welded under a shielding gas or with a fluxing agent covering, a filler wire which supplies this compound as a pure welding material, or a sheathed rod electrode of this type.

## Revendication

Procédé de fabrication d'articles soudés, résistant à la corrosion intercristalline sans traitement thermique ultérieur, en acier allié au chrome-nickel-molybdène ferritique-austénitique, comprenant en pourcentage en poids

au maximum 0,06% de C
au maximum 0,80% de Si

de 4,0 à 6,0% de Mn
de 23,5 à 28,0% de Cr
de 3,5 à 5,5% de Ni
de 1,0 à 3,0% de Mo
de 0,35 à 0,60% de N
le reste en fer avec les impuretés inévitables,

qui sont soudés au moyen d'un matériau d'apport ferritique-austénitique, caractérisé en ce que, pour souder un matériau différent du matériau de base comprenant

au maximum 0,06% de C
au maximum 1,0% de Si
de 4,0 à 6,5% de Mn
de 23,5 à 28,0% de Cr
de 6,5 à 8,5% de Ni
de 1,0 à 3,0% de Mo
de 0,30 à 0,50% de N
le reste en fer avec les impuretés inévitables,

on utilise comme matériau d'apport sous la forme de fil-électrode ou de bandes-électrode soudés en atmosphère gazeuse ou sous couverture de fondant un fil-électrode fourré fournissant cette composition sous forme de soudure pure ou une électrode en baguette de ce genre.